# EUROPÄISCHE PATENTSCHRIFT

(11) **EP 2 175 240 B1**
(45) Veröffentlichungstag und Bekanntmachung des Hinweises auf die Patenterteilung: **11.10.2017**
(21) Anmeldenummer: 09167918.3
(22) Anmeldetag: 14.08.2009
(51) Int. Cl.: G01C 21/34

(54) **Kombinierte Routenberechnung**
Combined route calculation
Calcul de routes combiné

(30) Priorität: 09.10.2008 DE 102008042698
(43) Veröffentlichungstag der Anmeldung: 14.04.2010
(73) Patentinhaber: Robert Bosch GmbH, 70442 Stuttgart (DE)
(72) Erfinder: Neukirchner, Ernst-Peter, 31139 Hildesheim (DE)

(56) Entgegenhaltungen:
- EP-A1- 0 803 852
- EP-A1- 1 508 778
- WO-A1-2006/060173
- DE-A1- 10 162 359

## Beschreibung

Die Erfindung betrifft ein Routenberechnungsverfahren, wobei das Routenberechnungsverfahren folgende Schritte umfasst: einen ersten Schritt eines Berechnens einer Gesamtroute von einer Startposition zu einem Reiseziel und einen auf den ersten Schritt folgenden zweiten Schritt eines Berechnens zumindest einer Teilroute.

Außerdem betrifft die Erfindung ein Zielführungsverfahren.

Des Weiteren betrifft die Erfindung eine Routenberechnungsvorrichtung, insbesondere eine Zielführungsvorrichtung, wobei die Routenberechnungsvorrichtung eine Recheneinheit zum Berechnen von Gesamtrouten und/oder Teilrouten, einen ersten Speicher zum Speichern einer digitalen Verkehrwegekarte, einen zweiten Speicher zum Speichern von Gesamt- und/oder Teilrouten und eine Ausgabeeinheit zum Ausgeben von Fahrempfehlungen umfasst. Unter Verkehrsweg wird hier ein Streckenabschnitt, beispielsweise eine Straße eines Straßennetzes, verstanden.

Konventionelle Routenberechnungsverfahren führen in der Regel entweder eine vorwärtsgerichtete oder eine rückwärtsgerichtete Berechnung durch. In der vorwärtsgerichteten Berechnung wird eine Route ausgehend von einer Startposition in Richtung zu einem Reiseziel berechnet. In der rückwärtsgerichteten Berechnung hingegen, wird die Route ausgehend von dem Reisziel in Richtung zu der Startposition berechnet. Im Vergleich zu vorwärtsgerichteten Routenberechnungsverfahren haben rückwärts gerichtete Routenberechnungsverfahren unter anderem den Vorteil, dass einem Nutzer (beispielsweise Fahrer) nach einem versehentlichen oder vorsätzlichem Abweichen von einer Routenempfehlung ohne Zeitverzug eine neue Fahrempfehlung gegeben werden kann. Dieses Leistungsmerkmal schätzen die Nutzer insbesondere in engmaschigen Innenstadtstraßennetzen. Andererseits haben vorwärtsgerichtete Routenberechnungsverfahren gegenüber den rückwärtsgerichteten folgenden Vorteil: Bei der Berechnung und Auswahl von Teilrouten, die auf dem Weg zwischen Startposition und Reiseziel liegen, ergeben sich (aufgrund der schrittweisen Berechnung in Vorwärtsrichtung mittels Akkumulation prognostizierter Fahrzeiten) strecken- bzw. knotenbezogene prognostizierte Ankunftszeiten an den einzelnen Streckenabschnitten, Kreuzungen, Teilrouten und/oder Generalisierungsebenen. Die prognostizierten Ankunftszeiten werden im gleichen Berechnungsdurchgang als Nebenergebnis erzeugt, so dass dafür ein weiterer Berechnungsdurchgang oder gar mehrere Iterationsschritte nicht durchzuführen sind. Folglich können im Zuge einer (einfachen) Vorwärtsberechnung auch zeitabhängige, insbesondere tageszeitlich veränderlichen Fahrzeiten, und/oder zeitabhängige Verkehrsbeschränkungen auf einfache Weise in die Routenberechnung einbezogen werden.

Bei dem rückwärtsgerichteten Routenberechnungsverfahren besteht der Vorteil einer einfachen Berechnung von Ankunftszeiten an einzelnen Verkehrswegen und Verkehrsknoten nur dann, wenn die Routenberechnung für eine vom Nutzer gewünschte Ankunftszeit am Reiseziel erfolgt. Wenn jedoch von einer gewünschten oder tatsächlichen Abfahrtzeit ausgegangen werden soll, haben rückwärtsgerichteten Routenberechnungsverfahren - wie das in DE 101 45 299 A1 für ein erstes und letztes Routensegment benutzte - den Nachteil, dass zu den einzelnen Verkehrwegen und Verkehrsknoten keine Ankunftszeiten zur Verfügung stehen. Diese werden aber dafür benötigt, um eine zeitabhängige, insbesondere eine tageszeitlich veränderliche Fahrzeit und/oder insbesondere eine zeitabhängige Verkehrsbeschränkung für den Verkehrsweg und/oder den Verkehrsknoten in die Routenberechnung einzubeziehen. Eine auch unter zeitlichen Gesichtspunkten optimale Route kann dann nicht ohne Weiteres berechnet werden. Eine Möglichkeit bestünde hier vielleicht noch durch Weiterbildung zu einem Iterationsverfahren, wodurch allerdings der Rechenaufwand, Zeitaufwand und Stromverbrauch, also der Ressourcenverbrauch, steigen würde.

Aus DE 101 62 359 A1 ist ein Verfahren zur Bereitstellung von Routendaten für ein Navigationsverfahren bekannt. Dabei wird eine Gesamtroute in Routensegmente unterteilt, die jeweils einen Teil der Gesamtroute umfassen. Es wird ein erstes Routensegment zum Navigationsgerät auf dessen Anforderung hin übertragen, das um den Startpunkt herum ein Startgebiet einer Mehrzahl von möglichen Routen sowie eine Hauptroute zu einem Zwischenziel aufweist. Zum Navigationsgerät wird vor Erreichen des Zwischenziels ein weiteres Routensegment übertragen, das um das Zwischenziel herum als dessen Startgebiet eine Mehrzahl von möglichen Routen sowie eine Hauptroute zu einem weiteren Zwischenziel oder dem Ziel selbst aufweist.

Aus EP 0 803 852 A1 ist ein Verfahren und eine Einrichtung zur Zielführung eines Fahrzeuges bekannt. Dabei wird mittels einer gespeicherten Straßenkarte eine über Wegleitpunkte führende Route zu einem Ziel ermittelt, die als Sollroute dem Führer des Fahrzeuges durch Wegleitinformationen vorgegeben. Zudem werden während der Fahrt des Fahrzeuges zu dem Ziel führende Alternativrouten ermittelt und gespeichert. Es wird geprüft, ob das Fahrzeug von der jeweiligen Sollroute abweicht. Bei Feststellung einer Abweichung wird eine der gespeicherten Alternativrouten als neue Sollroute dem Führer durch Wegleitinformationen angezeigt.

Aus WO 2006/060173 A1 wird ein Verfahren beschrieben, bei dem ausgehend von einem Startpunkt Alternativrouten zu einer berechneten Route berechnet werden. Zudem werden Routen zurück zur Alternativroute, d.h. Umkehrrouten oder in Richtung auf das Ziel berechnet.

Aus EP 1 508 778 A1 ist ein Verfahren zur Berechnung einer Fahrroute ausgehend von einer Startposition zu einer Zielpo sition bekannt, das die Merkmale des einleitenden Teiles des Anspruchs 1 aufweist. Diese Route wird dabei von einem Server berechnet und zu einem Fahrzeug übertragen. Direkt nach der Berechnung der Route werden vom Server Alternativrouten berechnet und ebenfalls an das Fahrzeug übertragen.

Der Erfindung liegt die Aufgabe zugrunde, ein gattungsgemäßes Routenberechnungsverfahren bereitzustellen, mit der mit möglichst geringem Ressourcenverbrauch eine auch unter zeitlichen Gesichtspunkten optimale Route berechnet werden kann, wobei bei einem Abweichen von der Route ohne Zeitverzug eine neue Fahrempfehlung gegeben werden kann. Darüber hinaus ist es eine Aufgabe der Erfindung, ein gattungsgemäßes Zielführungsverfahren und eine Routenberechnungsvorrichtung mit diesem Vorteil bereitzustellen.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Routenberechnungsverfahren dadurch auf, dass die Berechnung der zumindest einen Teilroute von einer auf der Gesamtroute liegenden Zwischenposition aus rückwärts erfolgt. Im entarteten Fall ist die Zwischenposition mit dem Reiseziel identisch. Das Verfahren sieht vor, dass in dem Schritt des Berechnens der zumindest einen Teilroute mindestens eine Alternativteilroute für ein Teilgebiet entlang der Gesamtroute berechnet wird. Ferner sieht das Verfahren vor, dass in dem Schritt des Berechnens der zumindest einen Teilroute mindestens eine Alternativteilroute für ein Teilgebiet entlang der Gesamtroute berechnet wird und dass, sobald ein Objekt einen vorbestimmten Mindestabstand zu einem Rand des Teilgebiets unterschritten hat, ein neues Teilgebiet bestimmt wird und dass in dem Schritt des Berechnens der zumindest einen Teilroute mindestens eine Alternativteilroute für das neue Teilgebiet entlang der Gesamtroute berechnet wird.

In einer bevorzugten Ausführungsform erfolgt das Berechnen der zumindest einen Teilroute unter Berücksichtigung mindestens einer zeitabhängigen, insbesondere einer tageszeitlich veränderlichen Fahrzeit und/oder insbesondere einer zeitabhängigen Verkehrsbeschränkung.

Eine weitere bevorzugte Ausführungsform sieht vor, dass das Berechnen der zumindest einen Teilroute durchgeführt wird. sobald ein durch das Routenberechnungsverfahren zielgeführtes Objekt sich entlang der Gesamtroute soweit bewegt hat, dass ein Kostenmaß bis zum Erreichen einer teilroutenspezifischen Zwischenposition unterschritten wird. Unter Objekt wird hier ein Fahrzeug oder ein Nutzer verstanden.

In einer ebenso bevorzugten Ausführungsform des Verfahrens wird in dem Schritt des Berechnens der zumindest einen Teilroute mindestens eine Alternativteilroute berechnet.

Eine besonders bevorzugte Ausführungsform sieht vor, dass in dem Schritt des Berechnens der zumindest einen Teilroute jeweils eine Alternativteilroute für mehrere Verkehrswege, insbesondere jeden Verkehrsweg, und/oder für mehrere Verkehrsknoten, insbesondere jeden Verkehrsknoten, des Teilgebiets entlang der Gesamtroute berechnet wird.

Außerdem kann eine Größe des Teilgebiets vergrößert werden, sobald das Objekt in dem Teilgebiet alle für das Teilgebiet berechneten Alternativrouten verlassen hat und/oder sobald das Objekt einen vorbestimmten Mindestabstand zu einem Rand des Teilgebiets unterschritten hat.

Auch kann es vorteilhaft sein, den Schritt des Berechnens der zumindest einen Teilroute für jede oder nahezu jede Abzweigung auf der Gesamtroute durchzuführen.

Die Erfindung baut auf dem gattungsgemäßen Zielführungsverfahren dadurch auf, dass das Zielführungsverfahren die Schritte des erfindungsgemäßen Routenberechnungsverfahren umfasst.

Die Erfindung baut auf der gattungsgemäßen Routenberechungsvorrichtung dadurch auf, dass die die Recheneinheit Gesamtrouten und/oder Teilrouten gemäß dem erfindungsgemäßen Routenberechnungsverfahren berechnet.

Die Erfindung wird nun mit Bezug auf die begleitenden Figuren anhand besonders bevorzugter Ausführungsformen beispielhaft erläutert.

Es zeigen:
- Fig. 1: ein schematisches Blockschaltbild von einer erfindungsgemäßen Routenberechnungsvorrichtung;
- Fig. 2: einen schematisches Übersichtsbild über ein Verkehrswegenetz; und
- Fig. 3: eine Ablaufdiagramm des erfindungsgemäßen Routenberechnungsverfahrens.

Im Folgenden werden Merkmale der in den Figuren dargestellten Anordnungen beschrieben, welche in einer gemeinsamen Ausführungsform verwirklicht sein können. Durch Verwendung übereinstimmender Bezugszeichen werden Verfahrensschritte und Komponenten hilfsweise auch mittels solcher Beschreibungsteile beschrieben, die anderen Figuren zugeordnet sind.

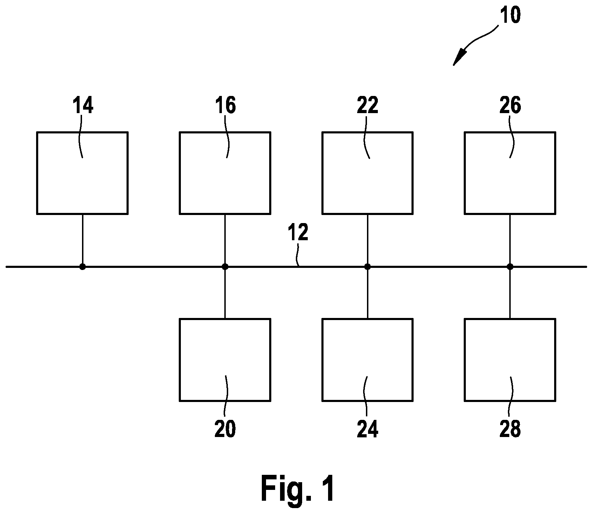

Die in Fig. 1 als Blockschaltbild gezeigte Routenberechnungsvorrichtung 10 zeigt eine mögliche Systemstruktur. Hierbei sind an einem Datenbus 12 eine Eingabeeinheit 14, eine Routenberechnungseinheit 16, eine Speichereinheit 20 zur Speicherung von elektronischen Kartendaten eines Verkehrswegenetzes, eine Recheneinheit 22, ein Programm- und Datenspeicher 24, eine Ausgabeeinheit 26 und ein Routenspeicher 28 angeschlossen. Zwei oder mehr Einheiten können zu einer gemeinsamen Einheit zusammengefasst sein. Insbesondere kann in dem Programm- und Datenspeicher 24 ein Routenberechnungsprogrammcode gespeichert sein, der dazu vorgesehen ist, auf der Recheneinheit 22 ausgeführt zu werden.

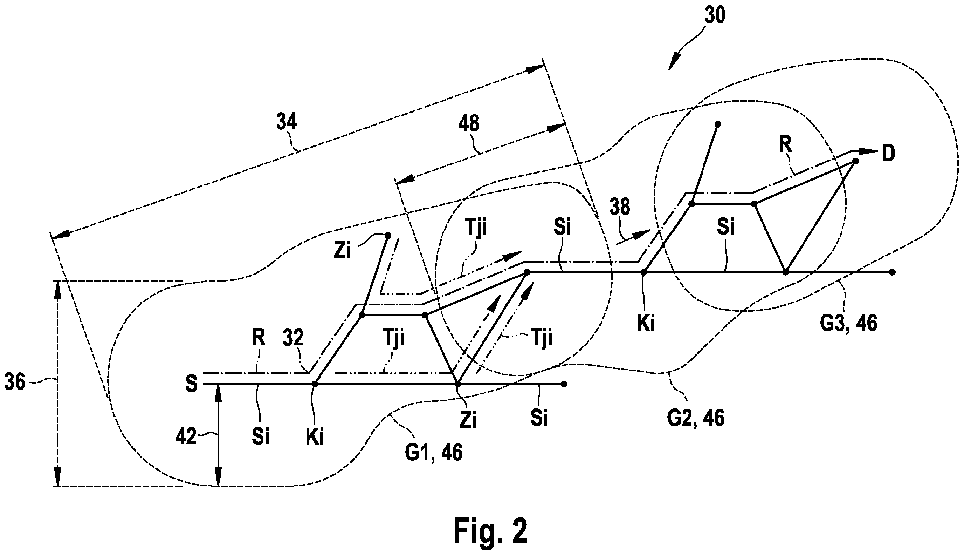

Fig. 2 zeigt einen Ausschnitt eines Verkehrswegenetzes 30 mit den Verkehrsknoten Ki, die mittels der Verkehrswege Si teilvermascht verbunden sind. Ein Nutzer, der von einer Startposition S zu einem Reiseziel D fahren will, kann hierfür eine von mehreren alternativen Routen wählen. Zur Erläuterung des erfindungsgemäßen Verfahrens wird nun als Beispiel angenommen, dass ein im Fahrzeug befindliches Zielführungssystem 10 nach Eingabe eines Namens, einer Koordinate oder einer Adresse des Reiseziels D (mittels der Eingabeeinheit 14) ein Befahren der Route R vorschlägt. Es kommt öfters vor, dass sich der Nutzer über den Vorschlag oder die Empfehlung des Zielführungssystems 10 hinwegsetzt, beispielsweise indem er beim Fahren die vorgeschlagene Route R verlässt. Dies geschieht dadurch, dass er eine berechnete Abbiegung 32 - vorsätzlich oder versehentlich - nicht nimmt oder dass er eine Abbiegung ausführt, die ihm nicht empfohlen wurde.

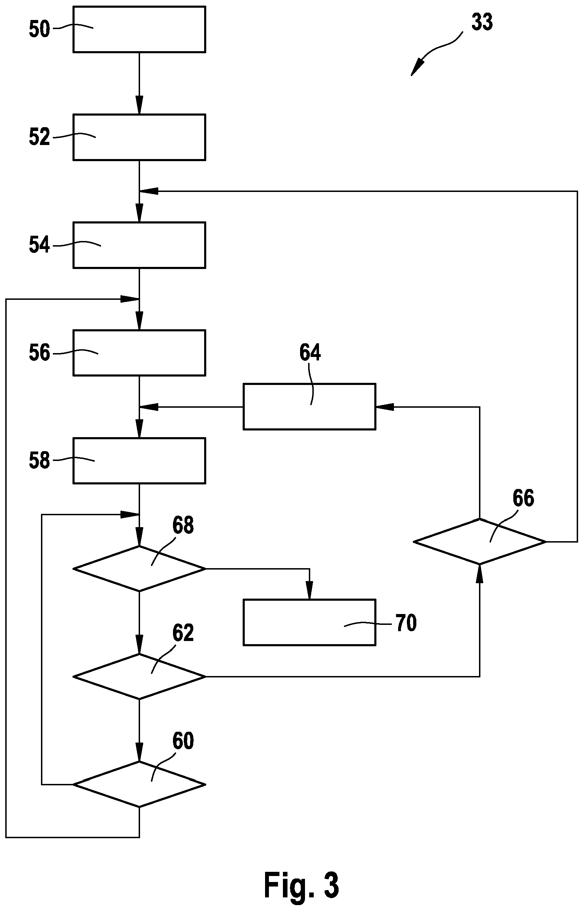

In dem in Fig. 3 dargestellten Routenberechnungsverfahren 33 werden nach einem Start 50 der Routenberechnung Verkehrswegdaten aus einem Speicher 20 eingelesen, in dem eine digitale Karte gespeichert ist (Schritt 52). Anhand dieser Daten wird eine Gesamtroute R zu einem Reiseziel D berechnet (Schritt 54). Vorzugsweise wird dabei eine Restkostenabschätzung zum Reiseziel D durchgeführt, damit nicht alle Verkehrswege Si bezüglich der Route R bewertet werden müssen. Im Zuge dieser Berechnung wird die erwartete Fahrzeit für jeden der Verkehrswege Si mitberechnet, so dass für jeden Verkehrsweg Si eine jeweilige Ankunftszeit bekannt ist. Damit können auch zeitlich veränderliche Fahrzeiten und/oder zeitabhängige Verkehrsbeschränkungen - beispielsweise Sperrungen für bestimmte Fahrzeugarten, Fahrzeughöhen oder -breiten oder generelle Sperrungen - bei der Routenberechnung berücksichtigt werden. Das Ergebnis wird in einem Routenspeicher 28 abgelegt.

Dann wird zur Berechnung von Alternativrouten Tji ein erstes Berechnungsgebiet G1 bestimmt, das zunächst mindestens die Startposition S der im Routenspeicher 28 abgelegten Route R enthält (Schritt 56). Vorzugsweise wird eine Länge 34 und/oder eine Breite 36 des ersten Berechnungsgebiets G1 unter Berücksichtigung einer summierten Streckenlänge und/oder summierten Fahrzeit und/oder Anzahl von Verkehrswegen Si der im Routenspeicher 28 abgelegten Route R bestimmt. Typischerweise erstrecken sich je ein Teil des ersten Berechnungsgebiets G1 in Reiserichtung 38 betrachtet links- bzw. rechtsseits der Route R. Ein Rand 46 des ersten Berechnungsgebiets G1 kann unter Berücksichtigung eines vorgegebenen geometrischen Abstands 42 von der Route R und/oder eines topologischen Abstands von der Route R (d.h. einer Anzahl von Verkehrswegen Si weg von der Route R) und/oder eines geschätzten Verkehrswiderstands und/oder einer geschätzten Reisezeit und/oder geschätzter Berechnungskosten erfolgen.

Die für das so bestimmte erste Berechnungsgebiet G1 ausgewählten Verkehrswege Si des Gesamtverkehrswegenetzes 30 werden in einem Speicher 24 abgelegt, wobei dies als Teilkopie der Daten aus dem Speicher 20 erfolgen kann oder als Liste oder Verzeichnis der aus dem Speicher 20 zu berücksichtigenden Verkehrswege Si. Anschließend werden für dieses erste Berechnungsgebiet G1 Routenkosten von Teilrouten T1i berechnet, die an Verkehrsknoten Ki der Gesamtroute R in Reiserichtung 38 betrachtet rückwärts anschließen (Schritt 58). Es ergibt sich dann für mehrere Verkehrswege Si und/oder für mehrere Verkehrsknoten Ki in dem ersten Berechnungsgebiet G1 je eine Teilroute T1i, die mit minimalen Kosten zur ursprünglich berechneten Gesamtroute R (zurück)führt. Damit wird erreicht, dass während der Reise auch an nicht geplanten Durchreiseorten Zi je eine auf Vorrat berechnete Alternativroute T1i ohne Zeitverzug vorliegt. Vorzugsweise werden für das erste Berechnungsgebiet G1 Teilrouten T1i für alle Verkehrswege Si und/oder für alle Verkehrsknoten Ki berechnet, die in dem ersten Berechnungsgebiet G1 liegen. Hierzu eignet sich beispielsweise der an sich bekannte Algorithmus nach Bellman-Ford-Moore. Folgt der Nutzer der ursprünglich berechneten Route R und nähert sich dabei dem Rand 46 des ersten Berechnungsgebiets G1 so weit, dass dabei ein bestimmtes Entfernungsmaß 48 unterschritten wird (Abfrage 60), so wird ein weiteres Berechnungsgebiet Gj bestimmt (Schritt 56), in dem Teilrouten Tji wie für das erste Berechnungsgebiet G1 berechnet werden (Schritt 58). Mit jeder erneuten Annäherung an den Rand 46 des jeweiligen weiteren Berechnungsgebiets Gj wird ein neues Berechnungsgebiet Gj bestimmt (Schritt 56), bis schließlich auch das Reiseziel D der Gesamtroute R in dem Berechnungsgebiet Gj enthalten ist. Wenn das neue Berechnungsgebiet Gj auch das Reiseziel D einschließt, kann es vorkommen, dass eine oder mehrere der Alternativrouten Tji das Reiseziel D so "anfahren", dass die Alternativroute Tji keinen Verkehrsweg Si und/oder keinen Verkehrsknoten Ki mehr mit der Gesamtroute R gemeinsam hat.

Wenn der Benutzer im Begriff ist, auch die Alternativrouten Tji des Berechnungsgebiets Gj und den Rand 46 des Berechnungsgebiets Gj zu verlassen (Abfrage 62), kann das Berechnungsgebiet Gj um ein wählbares Maß vergrößert werden und/oder in einer Richtung zum Abbild des tatsächlichen Aufenthaltsorts verschoben werden (Schritt 64), wobei dann für das vergrößerte bzw. verschobene Berechnungsgebiet Gj ebenfalls Alternativrouten Tji berechnet werden (Schritt 58). Wenn die Verschiebung und/oder Vergrößerung des Berechnungsgebiets Gj ein wählbares Maximalmaß erreicht hat und sich der Benutzer weiterhin einem Rand 46 dieses Berechnungsgebiets Gj nähert (Abfrage 66), kann dies eine Neuberechnung einer neuen Gesamtroute R vom aktuellen Aufenthaltsort Zi bis zum Reiseziel D auslösen (Schritt 54). Typischerweise werden dann - wie zuvor beschrieben - entlang dieser neu berechneten Gesamtroute R wiederum Berechnungsgebiete Gj und Alternativrouten Tji berechnet (Schritte 56 und 58). So wird der Nutzer auch dann mit einer Alternativroutenführung unterstützt, wenn er von der neu berechneten Gesamtroute Gj auch wieder abweicht. Wenn der Nutzer das Reiseziel erreicht hat (Abfrage 68), wird das Routenberechnungsverfahren beendet (Schritt 70).

Die in der vorstehenden Beschreibung, in den Zeichnungen sowie in den Ansprüchen offenbarten Merkmale der Erfindung und des Stands der Technik können sowohl einzeln als auch in beliebiger Kombination für die Verwirklichung der Erfindung wesentlich sein, mit der Einschränkung, dass zumindest die in den unabhängigen Ansprüchen definierten Merkmale in Kombination vorhanden sein müssen.

## Patentansprüche

1. Routenberechnungsverfahren (33), wobei das Routenberechnungsverfahren (33) folgende Schritte umfasst:
- einen ersten Schritt (54) eines Berechnens einer Gesamtroute (R) von einer Startposition (S) zu einem Reiseziel (D); und
- einen auf den ersten Schritt (54) folgenden zweiten Schritt (58) eines Berechnens zumindest einer Teilroute (Tji), wobei in dem Schritt des Berechnens der zumindest einen Teilroute (Tji) mindestens eine Alternativteilroute (Tji) für ein Teilgebiet (Gⱼ) entlang der Gesamtroute (R) berechnet wird, wobei die Berechnung der zumindest einen Teilroute (Tji) von einer auf der Gesamtroute (R) liegenden Zwischenposition (Ki) aus rückwärts erfolgt, wobei das Routenberechnungsverfahren **dadurch gekennzeichnet ist, dass**, sobald ein zielgeführtes Objekt einen vorbestimmten Mindestabstand (48) zu einem Rand (46) des Teilgebiets (Gj) unterschritten hat, ein neues Teilgebiet (Gj) bestimmt wird und dass in einem weiteren Schritt (58) des Berechnens der zumindest einen Teilroute (Tji) mindestens eine Alternativteilroute (Tji) für das neue Teilgebiet (Gj) entlang der Gesamtroute (R) berechnet wird.

2. Routenberechnungsverfahren (33) gemäß Anspruch 1, **dadurch gekennzeichnet, dass** das Berechnen der zumindest einen Teilroute (Tji) unter Berücksichtigung mindestens einer zeitabhängigen, insbesondere einer tageszeitlich veränderlichen Fahrzeit und/oder insbesondere einer zeitabhängigen Verkehrsbeschränkung, erfolgt.

3. Routenberechnungsverfahren (33) gemäß Anspruch 1 oder 2, **dadurch gekennzeichnet, dass** das Berechnen der zumindest einen Teilroute (Tji) durchgeführt wird, sobald ein durch das Routenberechnungsverfahren zielgeführtes Objekt sich entlang der Gesamtroute (R) soweit bewegt hat, dass ein Kostenmaß bis zum Erreichen einer teilroutenspezifischen Zwischenposition (Ki) unterschritten wird.

4. Routenberechnungsverfahren (33) gemäß einem der Ansprüche 1 bis 3, **dadurch gekennzeichnet, dass** in dem Schritt (58) des Berechnens der zumindest einen Teilroute (Tji) jeweils eine Alternativteilroute (Tji) für mehrere Verkehrswege (Si), insbesondere jeden Verkehrsweg (Si), und/oder für mehrere Verkehrsknoten (Ki), insbesondere jeden Verkehrsknoten (Ki), des Teilgebiets (Gⱼ) entlang der Gesamtroute (R) berechnet wird.

5. Routenberechnungsverfahren (33) gemäß einem der Ansprüche 1 bis 4, **dadurch gekennzeichnet, dass** eine Größe (34, 36) des Teilgebiets (Gj) vergrößert wird, sobald das Objekt in dem Teilgebiet (Gj) alle für das Teilgebiet (Gj) berechneten Alternativrouten (Tji) verlassen hat und/oder sobald das Objekt eine vorbestimmten Mindestabstand zu einem Rand (46) des Teilgebiets (Gj) unterschritten hat.

6. Routenberechnungsverfahren (33) gemäß einem der Ansprüche 1 bis 5, **dadurch gekennzeichnet, dass** der Schritt (58) des Berechnens der zumindest einen Teilroute (Tji) für jede oder nahezu jede Abzweigung (Ki) auf der Gesamtroute (R) durchgeführt wird.

7. Zielführungsverfahren (33), **dadurch gekennzeichnet, dass** das Zielführungsverfahren (33) die Schritte (54, 58) des Routenberechnungsverfahrens (33) gemäß einem der Ansprüche 1 bis 6 umfasst.

8. Routenberechnungsvorrichtung (10), insbesondere Zielführungsvorrichtung, wobei die Routenberechnungsvorrichtung (10) umfasst:
- eine Recheneinheit (22) zum Berechnen von Gesamtrouten (R) und/oder Teilrouten (Tji);
- einen ersten Speicher (20) zum Speichern einer digitalen Verkehrwegekarte;
- einen zweiten Speicher (28) zum Speichern von Gesamtrouten (R) und/oder Teilrouten (Tji); und
- eine Ausgabeeinheit (26) zum Ausgeben von Fahrempfehlungen;
wobei die Routenberechnungsvorrichtung (10) **dadurch gekennzeichnet ist, dass** die Recheneinheit (22) dazu ausgebildet ist, Gesamtrouten (R) und Teilrouten (Tji) gemäß einem der Verfahren der Ansprüche 1 bis 6 zu berechnen.

## Claims

1. Route computation method (33), wherein the route computation method (23) comprises the following steps:
- a first step (54) of computation of a total route (R) from a starting position (S) to a travel destination (D); and
- a second step (58), following the first step (54), of computation of at least one route element (Tji), wherein the step of computation of the at least one route element (Tji) involves at least one alternative route element (Tji) being computed for a subarea (Gj) along the total route (R), wherein the at least one route element (Tji) is computed backwards from an intermediate position (Ki) situated on the total route (R), the route computation method being **characterized**
**in that** as soon as a routed object has come within a predetermined minimum distance (48) of an edge (46) of the subarea (Gj), a new subarea (Gj) is determined and in that a further step (58) of computation of the at least one route element (Tji) involves at least one alternative route element (Tji) being computed for the new subarea (Gj) along the total route (R).

2. Route computation method (33) according to Claim 1, **characterized in that** the at least one route element (Tji) is computed by taking into consideration at least one time-dependent journey time, particularly a journey time that is variable throughout the day, and/or particularly a time-dependent traffic restriction.

3. Route computation method (33) according to Claim 1 or 2, **characterized in that** the computation of the at least one route element (Tji) is performed as soon as an object routed by the route computation method has moved along the total route (R) to the extent that a measure of cost is not obtained by the time a route-element-specific intermediate position (Ki) is reached.

4. Route computation method (33) according to one of Claims 1 to 3, **characterized in that** the step (58) of computation of the at least one route element (Tji) involves a respective alternative route element (Tji) being computed for multiple traffic routes (Si), particularly every traffic route (Si), and/or for multiple traffic nodes (Ki), particularly every traffic node (Ki), of the subarea (Gj) along the total route (R).

5. Route computation method (33) according to one of Claims 1 to 4, **characterized in that** a size (34, 36) of the subarea (Gj) is increased as soon as the object in the subarea (Gj) has left all alternative routes (Tji) computed for the subarea (Gj) and/or as soon as the object has come within a predetermined minimum distance of an edge (46) of the subarea (Gj).

6. Route computation method (33) according to one of Claims 1 to 5, **characterized in that** the step (58) of computation of the at least one route element (Tji) is performed for every or almost every branch (Ki) on the total route (R).

7. Routing method (33), **characterized in that** the routing method (33) comprises the steps (54, 58) of the route computation method (33) according to one of Claims 1 to 6.

8. Route computation apparatus (10) particularly routing apparatus, wherein the route computation apparatus (10) comprises:
- a computation unit (22) for computing total routes (R) and/or route elements (Tji);
- a first memory (20) for storing a digital traffic route map;
- a second memory (28) for storing total routes (R) and/or route elements (Tji); and
- an output unit (26) for outputting driving recommendations;
wherein the route computation apparatus (10) is **characterized in that** the computation unit (22) is designed to compute total routes (R) and route elements (Tji) according to one of the methods of Claims 1 to 6.

## Revendications

1. Procédé de calcul de trajet (33), dans lequel le procédé de calcul de trajet (33) comprend les phases suivantes :
- une première phase (54) d'un calcul d'un trajet global (R) depuis une position de départ (S) jusqu'à une destination de voyage (D) ; et
- une deuxième phase (58) d'un calcul de tout au moins un trajet partiel (Tji), laquelle est consécutive à la première phase (54) ;
dans lequel au moins un trajet partiel de rechange (Tji) est calculé le long du trajet global (R) pour une zone partielle (Gj), durant la phase de calcul du tout au moins un trajet partiel (Tji), dans lequel le calcul du tout au moins un trajet partiel (Tji) est réalisé en sens inverse depuis une position intermédiaire (Ki) qui se trouve sur le trajet global (R), dans lequel le procédé de calcul de trajet est **caractérisé en ce qu'**une nouvelle zone partielle (Gj) est déterminée dès qu'un objet poursuivant la destination se trouve en deçà d'une distance minimale (48) prédéterminée par rapport à un bord (46) de la zone partielle (Gj) ; et **en ce qu'**au moins un trajet partiel de rechange (Tji) est calculé le long du trajet global (R) pour la nouvelle zone partielle (Gj), dans une autre phase (58) de calcul du tout au moins un trajet partiel (Tji).

2. Procédé de calcul de trajet (33) selon la revendication 1, **caractérisé en ce que** le calcul du tout au moins un trajet partiel (Tji) est réalisé en tenant compte d'au moins un temps de conduite variable en fonction du temps, en particulier en fonction de l'heure de la journée et/ou en particulier en fonction d'une limitation de la circulation en fonction du temps.

3. Procédé de calcul de trajet (33) selon la revendication 1 ou 2, **caractérisé en ce que** le calcul du tout au moins un trajet partiel (Tji) est effectué dès qu'un objet poursuivant la destination au moyen du procédé de calcul de trajet s'est déplacé le long du trajet global (R) sur une distance telle qu'un repère de coût se trouve en deçà d'une valeur définie jusqu'à ce que soit atteinte une position intermédiaire (Ki) spécifique au trajet partiel.

4. Procédé de calcul de trajet (33) selon l'une des revendications 1 à 3, **caractérisé en ce que**, dans la phase (58) de calcul du tout au moins un trajet partiel (Tji), un trajet partiel de rechange (Tji) est respectivement calculé le long du trajet global (R) pour plusieurs voies de circulation (Si), en particulier pour chaque voie de circulation (Si), et/ou pour plusieurs noeuds de circulation (Ki), en particulier pour chaque noeud de circulation (Ki), de la zone partielle (Gj).

5. Procédé de calcul de trajet (33) selon l'une des revendications 1 à 4, **caractérisé en ce qu'**une grandeur (34, 36) de la zone partielle (Gj) est agrandie, dès que l'objet se trouvant dans la zone partielle (Gj) a quitté tous les trajets de rechange (Tji) calculés pour la zone partielle (Gj) et/ou dès que l'objet se trouve en deçà d'une distance minimale prédéterminée par rapport à un bord (46) de la zone partielle (Gj).

6. Procédé de calcul de trajet (33) selon l'une des revendications 1 à 5, **caractérisé en ce que** la phase (58) de calcul du tout au moins un trajet partiel (Tji) est effectuée pour chaque croisement (Ki) ou pour presque chaque croisement (Ki) qui se trouve sur le trajet global (R).

7. Procédé de guidage vers une destination (33), **caractérisé en ce que** le procédé de guidage vers une destination (33) comprend les phases (54, 58) du procédé de calcul de trajet (33) selon l'une des revendications 1 à 6.

8. Dispositif de calcul de trajet (10), en particulier dispositif de guidage vers une destination, dans lequel le dispositif de calcul de trajet (10) comprend :
- une unité de calcul (22), laquelle est destinée au calcul de trajets globaux (R) et/ou de trajets partiels (Tji) ;
- une première mémoire (20), laquelle est destinée à l'enregistrement d'une carte numérique des voies de circulation ;
- une deuxième mémoire (28), laquelle est destinée à l'enregistrement de trajets globaux (R) et/ou de trajet partiels (Tji) ; et
- une unité de sortie (26), laquelle est destinée à la transmission de recommandations de conduite ;
dans lequel le dispositif de calcul de trajet (10) est **caractérisé en ce que** l'unité de calcul (22) est conçue en vue de calculer des trajets globaux (R) et des trajets partiels (Tji) selon l'un des procédés des revendications 1 à 6.
